# EUROPÄISCHE PATENTSCHRIFT

(11) **EP 0 907 621 B1**
(45) Veröffentlichungstag und Bekanntmachung des Hinweises auf die Patenterteilung: **11.04.2001**
(21) Anmeldenummer: 97927088.1
(22) Anmeldetag: 30.05.1997
(51) Int. Cl.: C04B 38/06, C04B 41/85, B01D 39/20

(54) **OFFENZELLIGE SCHAUMKERAMIK MIT HOHER FESTIGKEIT UND VERFAHREN ZU DEREN HERSTELLUNG**
OPEN-CELL EXPANDED CERAMIC WITH A HIGH LEVEL OF STRENGTH, AND PROCESS FOR THE PRODUCTION THEREOF
CERAMIQUE EXPANSEE A CELLULES OUVERTES PRESENTANT UNE RESISTANCE ELEVEE ET SON PROCEDE DE PRODUCTION

(30) Priorität: 30.05.1996 DE 19621638
(43) Veröffentlichungstag der Anmeldung: 14.04.1999
(73) Patentinhaber: FRAUNHOFER-GESELLSCHAFT ZUR FÖRDERUNG DER ANGEWANDTEN FORSCHUNG E.V., 80636 München (DE); Foseco International Limited, Swindon, Wiltshire SN3 1RE (GB)
(72) Erfinder: ADLER, Jörg, D-01622 Mei en (DE); TEICHGRÄBER, Michael, D-01561 Zottewitz (DE); STANDKE, Gisela, D-01099 Dresden (DE); JAUNICH, Helmut, D-46348 Raesfeld (DE); STÖVER, Heike, D-01217 Dresden (DE); STÖTZEL, Reinhard, D-46325 Borken (DE)
(74) Vertreter: Rauschenbach, Marion, Dipl.-Ing.
(86) Internationale Anmeldenummer: EP9702828
(87) Internationale Veröffentlichungsnummer: WO9745381

(56) Entgegenhaltungen:
- EP-A- 0 369 098
- GB-A- 2 097 777
- US-A- 3 451 841
- CHEMICAL ABSTRACTS, vol. 102, no. 4, 28.Januar 1985 Columbus, Ohio, US; abstract no. 30800c, XP000284727 & JP 59 169 963 A (CATALER KOGYO KK; TOYOTA MOTOR CO LTD) 26.September 1984
- CHEMICAL ABSTRACTS, vol. 110, no. 4, 23.Januar 1989 Columbus, Ohio, US; abstract no. 28104a, XP000019575 & JP 63 159 267 A (NABEYA IRON AND TOOL WORKS LTD) 2.Juli 1988
- CHEMICAL ABSTRACTS, vol. 111, no. 14, 2.Oktober 1989 Columbus, Ohio, US; abstract no. 119809w, XP000153221 & JP 01 053 760 A (NABEYA IRON AND TOOL WORKS LTD) 1.März 1989
- PATENT ABSTRACTS OF JAPAN vol. 017, no. 361 (C-1080), 8.Juli 1993 & JP 05 051278 A (BRIDGESTONE CORP), 2.März 1993,
- CHEMICAL ABSTRACTS, vol. 107, no. 26, 28.Dezember 1987 Columbus, Ohio, US; abstract no. 241497a, XP000017897 & JP 62 216 981 A (IBIDEN CO LTD) 24.September 1987
- CHEMICAL ABSTRACTS, vol. 108, no. 20, 16.Mai 1988 Columbus, Ohio, US; abstract no. 172362j, XP000018801 & JP 63 011 589 A (IBIDEN CO LTD) 19.Januar 1988

## Beschreibung

### Technisches Gebiet

Die Erfindung bezieht sich auf das Gebiet der Keramik und betrifft eine offenzellige Schaumkeramik mit hoher Festigkeit, wie sie z.B. als Tiefenfilter, Stützkörper für die Filtration, Wärmetauscher, Regenerator, elektrisch beheizbarer Thermostat, Katalysatorträger, Brennelement für Flächenstrahlungsbrenner und Volumenbrenner, Hochtemperaturreaktionskammer, Schallabsorber oder Versteifungsmaterial für Paneele für hohe Temperaturen zur Anwendung kommen kann und ein Verfahren zu deren Herstellung.

### Stand der Technik

Bekannt sind Verfahren zur Herstellung von offenzelligen Schaumkeramiken nach dem sogenannten "Schwartzwalder-Verfahren", welches industriell genutzt und am weitesten verbreitet ist. Entsprechend diesem Verfahren wird aus einem offenzelligen Polymerschaum das gewünschte Bauteil herausgeschnitten und anschließend mit einer Suspension aus keramischen Partikeln und Wasser oder Lösungsmittel getränkt. Danach wird der getränkte Polymerschaum ein- oder mehrmals mechanisch ausgepreßt und danach getrocknet. Nun erfolgt das Ausbrennen des Polymerschaumes und danach die Sinterung der zurückgebliebenen keramischen Beschichtung (US 3,090,094).
Nach diesem Verfahren hergestellte offenzellige Schaumkeramik ist eine Abformung der zellenartigen Polymerstruktur des Ausgangsmaterials. Durch das Ausbrennen des Polymerschaumes sind die verbliebenen keramischen Stege hohl. Der Querschnitt dieser Stege ist dreikantig und die Form der Hohlräume ist im Querschnitt ebenfalls dreikantig. An den Kanten der Hohlräume ist die keramische Beschichtung häufig gerissen. Die Hohlräume und die Risse führen zu einer sehr geringen mechanischen Festigkeit. Da durch die Schwindung der keramischen Beschichtung beim Sintern die Rißanfälligkeit noch erhöht wird, verwendet man relativ schwindungsarme Massen, die aber nach dem Sintern eine hohe innere Porosität aufweisen. Dies führt ebenfalls zu einer geringen mechanischen Festigkeit (J. A,. Ceram. Soc. 77(6), 1467-72 (1994)).

Zur Erhöhung der Festigkeit wurde bereits versucht, die offenzellige Schaumkeramik mit höherer Festigkeit zu versehen, indem die Keramikstege des Schaumes mit einer oder mehreren nachträglichen Beschichtungen vor oder nach der Sinterung des Keramikschaums versehen werden. Diese nachträglichen Beschichtungen werden aufgebracht, indem entweder der beschichtete Polymerschaum oder die gesinterte Schaumkeramik mit einem keramischen Schlicker (Suspension) getränkt wird (z.B. GB 2097777).
Die Schwierigkeit besteht dabei darin, daß die überschüssige Suspension aus den Zellen der Schaumkeramik nicht mehr mechanisch ausgepreßt werden kann, ohne die nunmehr starre Schaumstruktur zu zerstören, weshalb sehr dünnflüssige Suspensionen mit niedrigem Feststoffgehalt verwendet werden müssen, die abtropfen können, ohne zu einem Verschluß der Zellen und damit einer Verringerung der Offenzelligkeit zu führen. Dünnflüssige Suspensionen mit niedrigem Feststoffgehalt besitzen den Nachteil, daß der Überzug aus keramischen Partikeln nur dünn ist und dieser während des Trocknens der Suspension durch Trocknungsrisse bzw. während der Versinterung durch Schwindungsrisse unterbrochen wird.

Weiterhin ist die Wirksamkeit einer äußeren Mehrfach-Beschichtung der Zellstege nur gering, da die ungünstige Struktur der Hohlräume in den Stegen nicht beseitigt wird. Außerdem verringert eine nachträgliche Beschichtung das Volumen der freien Zellen der Schaumkeramik, was für die meisten Anwendungen von Nachteil ist (J. Am. Ceram. Soc. 77 (6),1467-72 (1994) auf Seite 1467 2. Absatz, links).

Bekannt ist aus EP 0369 098 ein Verfahren, bei dem ein vorgesinterter offenzelliger Keramikschaum mit einer Suspension aus kolloidalem Feuerfestoxid und einem Feuerfest-Oxid-Pulver unter Vakuum getränkt wird, nach Abtropfen der Suspension getrocknet und gesintert wird. Neben einer Beschichtung der Zellstege (wie oben ausgeführt) soll damit während der Imprägnierung auch eine Füllung der Hohlräume der Zellstege mit der Suspension erreicht werden. Wie bereits oben beschrieben, muß für die Imprägnierung eine sehr dünnflüssige Suspension benutzt werden, wodurch der Anteil an keramischen Partikeln, der während der Imprägnierung in die Hohlräume der Stege gelangen kann, nur sehr gering ist. Dadurch ist der Volumenanteil an keramischer Phase nach dem Sintern nur äußerst gering. Außerdem reißen die Schichten aus niedrigkonzentrierten keramischen Suspensionen, wie oben angeführt, mehrfach beim Trocknen und Sintern, wodurch deren Verstärkungswirksamkeit weiter herabgesetzt wird.

Weiterhin bekannt ist die Herstellung eines offenzelligen Carbonschaumes mittels CVD/CVI. Dabei wird der Carbonschaum durch Pyrolyse eines offenzelligen Polymerschaumes hergestellt und anschließend entsprechend der gewünschten Bauteilgeometrie zugeschnitten. Danach erfolgt die Beschichtung des Carbonschaumes mit keramischen Komponenten mittels CVD/CVI (Ceram. Bull. Vol. 70, No 6, 1991, 1025 - 1028). Ein derartiges Herstellungsverfahren ist sehr teuer und erfordert eine aufwendige Anlagentechnik.
Die nach diesem Verfahren hergestellte Schaumkeramik ist ebenfalls eine Abformung der zellenartigen Polymerstruktur des Ausgangsmateriales. Die keramischen Stege bestehen aus einer dichten Schicht der aufgebrachten Keramik, wobei die Stege innen aus dem ursprünglichen Carbon-Gerüst bestehen. Durch die Dichte und Festigkeit der Keramikbeschichtung ist die Schaumkeramik insgesamt sehr fest, aber durch das innere Carbon-Gerüst, das eine wesentlich niedrigere Festigkeit als die Keramikschicht hat, reicht die mechanische Festigkeit bei hohen Belastungen ebenfalls nicht aus. Außerdem ist bei hohen Temperaturen das Carbon-Gerüst oxidativen Prozessen ausgesetzt, wodurch die ansonsten gute Hochtemperaturstabilität der Schaumkeramik sehr leidet. Aus diesen Gründen wird für Anwendungen bei höheren Temperaturen das Carbon-Gerüst entfernt, wodurch aber wieder hohle Keramikstege entstehen.

Ein weiteres bekanntes Verfahren zur Herstellung einer offenzelligen Schaumkeramik ist die Direktschäumung durch ein Treibmittel. Dafür wird zunächst eine Suspension aus keramischen Partikeln und Wasser oder einem Lösungsmittel hergestellt. Zu dieser Suspension wird ein Treibmittel und Polymerkomponenten zugegeben. Anschließend wird diese Suspension in eine Form gegossen und die Reaktion des Treibmittels gestartet. Durch diese Reaktion kommt es zur Entwicklung von Gasblasen, die zu einem Aufschäumen der Suspension führen. Anschließend werden die Polymerkomponenten vernetzt, wodurch der Schaum erstarrt. Die Polymerkomponenten werden danach ausgebrannt und der verbliebene Schaum wird gesintert (Produktblatt Schäumungsmittel W 53 FL., Fa. Zschimmer & Schwarz GmbH & Co, Lahnstein). Der Nachteil dieses Verfahrens besteht darin, daß die Schäumung schwierig zu steuern ist.
Eine nach diesem Verfahren hergestellte Schaumkeramik hat eine netzartige Struktur. Die keramischen Stege bestehen nach dem Sintern im vollen Querschnitt aus Keramik.
Die äußere Geometrie einer derartigen Schaumkeramik ist mindestens in einer Dimension durch die Offenheit der Form, in der die Schäumung stattfindet begrenzt. Die gesinterte Schaumkeramik ist mikroskopisch sehr porös, da die Suspension keine hohe Konzentration an Partikel erlaubt. Bei höheren Konzentrationen wird die Suspension zu schwer und die Schäumung geht nicht oder nur unvollständig vonstatten. Niedrige Feststoffkonzentrationen führen zu einer sehr lockeren Struktur der ausgebrannten Keramik. Bei der Verdichtung der Keramik durch Schwindung beim Sintern treten ebenfalls Spannungen und Risse auf, wodurch die Festigkeit der Keramik begrenzt wird. Wählt man ein keramisches System mit geringer Schwindung, so bleibt die Porosität erhalten, woraus ebenfalls niedrige Festigkeiten resultieren.
Weiterhin ist von Nachteil, daß die Porenweite insgesamt und insbesondere über die Höhe der Form schwer steuerbar ist und damit die Durchströmbarkeit der Schaumkeramik beeinträchtigt wird.

Ebenfalls bekannt ist weiterhin ein Verfahren zur Herstellung von Schaumkeramik durch Direktschäumung mittels Luft. Dabei wird in eine Suspension aus keramischen Partikeln und Wasser oder einem Lösungsmittel eine Polymerkomponente zugegeben.
Anschließend werden Luftblasen in die Suspension durch einen schnellaufenden Spezialrührer eingebracht. Die schaumige Suspension wird dann in eine Form eingebracht und durch Vernetzung der Polymerkomponente erstarrt der Schaum. Anschließend wird die Polymerkomponente ausgebrannt und der Schaum gesintert.
Mittels dieses Verfahrens sind nur sehr feine Schäume herstellbar, die eine geringe Offenzelligkeit aufweisen. Die Stege aus keramischen Material bestehen im vollen Querschnitt daraus. Die Festigkeit dieser Schäume ist ebenfalls begrenzt, da keine hohe Konzentration an Partikeln möglich ist und beim Schwinden während des Sinterns ebenfalls Spannungen und Risse auftreten, die die Festigkeit der Schaumkeramik begrenzen. Außerdem ist auch hier die Durchströmbarkeit des Schaumes beeinträchtigt, da die "Poren" häufig geschlossene Zellen darstellen.

### Darstellung der Erfindung

Die Aufgabe der Erfindung besteht darin, mit einem einfachen und preiswerten Verfahren eine offenzellige Schaumkeramik mit einer verbesserten Festigkeit herzustellen.

Die Aufgabe wird durch die in den Ansprüchen angegebene Erfindung gelöst.

Bei der erfindungsgemäßen offenzelligen Schaumkeramik mit hoher Festigkeit sind die inneren Hohlräume der keramischen Stege, die Risse der keramischen Stege und die Porosität der keramischen Stege mit einer oder mehreren metallischen und/oder keramischen Phasen und/oder Glasphasen ganz oder im wesentlichen ganz gefüllt.

Vorteilhafterweise sind die inneren Hohlräume der keramischen Stege, die Risse der keramischen Stege und die Porosität der keramischen Stege mit einer oder mehreren metallischen Phasen ganz oder im wesentlichen ganz gefüllt.

Ebenfalls vorteilhafterweise sind die inneren Hohlräume der keramischen Stege, die Risse der keramischen Stege und die Porosität der keramischen Stege mit einer oder mehreren keramischen Phasen ganz oder im wesentlichen ganz gefüllt.

Es ist auch vorteilhaft, wenn die inneren Hohlräume der keramischen Stege, die Risse der keramischen Stege und die Porosität der keramischen Stege mit einer oder mehreren Glasphasen ganz oder im wesentlichen ganz gefüllt sind.

Von Vorteil ist es auch, wenn die inneren Hohlräume der keramischen Stege, die Risse der keramischen Stege und die Porosität der keramischen Stege mit Silicium oder Siliciumverbindungen, mit Molybdan oder Metallsiliciden oder mit Aluminium-Yttriumoxid oder mit Kalzium-Silikaten oder Strontium-Kalzium-Silikaten oder Fluoriden für Siliciumcarbid-Schaumkeramiken, mit Kupfer-Titan- oder Eisen-Titan-Legierungen oder mit Titancarbid für Aluminiumoxid-Schaumkeramiken, mit Mullit für Zirkonoxid-Schaumkeramiken ganz oder im wesentlichen ganz gefüllt sind.

Eine weitere vorteilhafte Variante der Erfindung besteht darin, daß die inneren Hohlräume der keramischen Stege, die Risse der keramischen Stege und die Porosität der keramischen Stege von Siliciumcarbid-Schaumkeramiken mit Silicium und/oder Siliciumverbindungen ganz oder im wesentlichen ganz gefüllt sind.

Weiterhin wird die erfindungsgemäße offenzellige Schaumkeramik mit hoher Festigkeit, deren innere Hohlräume der keramischen Stege, die Risse der keramischen Stege und die Porosität der keramischen Stege mit einer oder mehreren metallischen und/oder keramischen Phasen und/oder Glasphasen ganz oder im wesentlichen ganz gefüllt sind, erfindungsgemäß hergestellt, indem ein offenzelliger Polymerschaurn zugeschnitten, mit einer Suspension aus keramischen Partikeln und Wasser oder einem Lösungsmittel beschichtet, ausgepreßt und getrocknet wird, danach der Polymerschaum ausgebrannt oder pyroiysiert wird, anschließend der beschichtete Schaum gesintert wird und während oder nach der Sinterung die Hohlräume der keramische Stege, die Risse der keramischen Stege und die Porosität der keramischen Stege der gesinterten Schaumkeramik mit einer Schmelze oder einer Suspension ganz oder im wesentlichen ganz gefüllt werden, wobei die Schmelze und die Suspension aus Stoffen besteht, die unterhalb der Schmelztemperatur der Schaumkeramik schmelzen, eine ähnlichen Ausdehnungskoeffizienten wie die Schaumkeramik aufweisen, sehr gut benetzend sind und nicht oder teilweise mit Bestandteilen der Schaumkeramik reagieren, und wobei im Falle der Füllung der Stege mit einer Suspension anschließend die mit der Suspension gefüllte Schaumkeramik bis auf eine Temperatur oberhalb der Schmelztemperatur der in der Suspension enthaltenen Stoffe, Stoffgemische oder deren Reaktionsprodukte aufgeheizt wird.

Vorteilhafterweise werden die Hohlräume der keramische Stege, die Risse der keramischen Stege und die Porosität der keramischen Stege der gesinterten Schaumkeramik mit einer Schmelze gefüllt, die aus Silicium oder Siliciumverbindungen, aus Molybdän oder Metallsiliciden oder aus Aluminium-Yttriumoxid oder aus Kalzium-Silikaten oder Strontium-Kalzium-Silikaten oder Fluoriden für Siliciumcarbid-Schaumkeramiken, aus Kupfer-Titan- oder Eisen-Titan-Legierungen oder aus Titancarbid für Aluminiumoxid-Schaumkeramiken, aus Mullit für Zirkonoxid-Schaumkeramiken besteht.

Auch vorteilhafterweise werden die Hohlräume der keramische Stege, die Risse der keramischen Stege und die Porosität der keramischen Stege der gesinterten Schaumkeramik mit einer Schmelze gefüllt, die aus Silicium oder Siliciumverbindungen mit Aluminium, Bor, Eisen, Kupfer oder Sauerstoff für Siliciumcarbid-Schaumkeramiken besteht.

Eine weitere vorteilhafte Variante der Erfindung besteht darin, daß die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel Pulver aus Silicium oder Siliciumverbindungen, aus Molybdän oder Metallsiliciden oder aus Aluminium-Yttriumoxid oder aus Kalzium-Silikaten oder Strontium-Kalzium-Silikaten oder Fluoriden für Siliciumcarbid-Schaumkeramiken, aus Kupfer-Titan- oder Eisen-Titan-Legierungen oder aus Titancarbid für Aluminiumoxid-Schaumkeramiken, aus Mullit für Zirkonoxid-Schaumkeramiken enthält. Nach dem Füllen der Hohlräume der keramischen Stege, der Risse der keramischen Stege und der Porosität der keramischen Stege mit der Suspension erfolgt die Trocknung. Dadurch befindet sich dann in den Hohlräumen, Rissen und Poren das in der Suspension enthaltene Pulver und/oder dessen Reaktionsprodukte. Unmittelbar anschließend an die Trocknung oder später wird diese gesinterte Schaumkeramik mit dem in den Hohlräumen, Rissen oder Poren vorhandenen Pulver und/oder dessen Reaktionsprodukten auf eine Temperatur oberhalb der Schmelztemperatur der Pulverbestandteile oder deren Reaktionsprodukte aufgeheizt. Dadurch kommt es zum Aufschmelzen der Pulverbestandteile und/oder deren Reaktionsprodukten. Diese Schmelze füllt dann die Hohlräume, Risse und Poren der gesinterten Schaumkeramik ganz oder teilweise aus und erstarrt dort beim Abkühlen.

Ebenfalls ist es vorteilhaft, wenn die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel Pulver aus Silicium oder Siliciumverbindungen mit Aluminium, Bor, Eisen, Kupfer oder Sauerstoff für Siliciumcarbid-Schaumkeramiken enthält. Die Suspension wird dann ebenfalls getrocknet und unmittelbar anschließend oder später auf eine Temperatur aufgeheizt, die die Pulverbestandteile und/oder Reaktionsprodukte aufschmilzt.

Vorteile ergeben sich auch, wenn die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel ein Pulver aus Glasfritte enthält. Die Suspension wird dann ebenfalls getrocknet und unmittelbar anschließend oder später auf eine Temperatur aufgeheizt, die die Pulverbestandteile und/oder Reaktionsprodukte aufschmilzt.

Zweckmäßig ist auch, wenn Glasfritte eingesetzt wird, die aus Fritten von einem oder mehreren Borosilicatgläsern, Alumoborosilicatgläsern und/oder Lithiumalumosilicatgläsern besteht.

Besonders vorteilhaft ist es, wenn die eingesetzten Stoffe, aus denen die Schmelze besteht oder die in der Suspension enthalten sind, im geschmolzenen Zustand einen Kontaktwinkel von 0 bis 50 ° aufweisen.

Eine weitere Ausgestaltungsmöglichkeit der Erfindung besteht darin, daß die eingesetzten Stoffe, aus denen die Schmelze besteht oder die in der Suspension enthalten sind, im geschmolzenen Zustand teilweise mit Bestandteilen der Schaumkeramik reagieren und damit zu einer Reaktionsbindung mit der Schaumkeramik führen.

Das erfindungsgemäße Verfahren kann zweckmäßigerweise auch dahingehend ausgestaltet werden, daß die Füllung der inneren Hohlräume der keramischen Stege, die Risse der keramischen Stege und der Porosität der keramischen Stege durch Schmelzeninfiltration erfolgt.

Vorteilhafterweise erfolgt die Schmelzeninfiltration durch Docht-, Schütt- oder Pasteninfiltration.

Die Schaumkeramik umfaßt letztendlich die keramische Beschichtung, die nach dem Ausbrennen des Polymerschaumes übrig bleibt. In die inneren Hohlräume der keramischen Stege, die Risse der keramischen Stege dieser Schaumkeramik wird erfindungsgemäß eine Schmelze oder eine Suspension eingebracht.

Durch die erfindungsgemäße Lösung kann eine offenzellige Schaumkeramik mit hoher Festigkeit und gleichmäßiger Porenstruktur mit einem einfachen und preiswerten Verfahren hergestellt werden. Dies wird erreicht, indem die ehemaligen Hohlräume, Risse und die Porosität in den keramischen Stegen mit einer Schmelze gefüllt werden, die dann erstarrt.
Weiterhin können die keramischen Stege auch mit einer Suspension gefüllt werden. Die derart gefüllte Schaumkeramik wird dann bis auf eine Temperatur aufgeheizt, die oberhalb der Schmelztemperatur der in der Suspension enthaltenen Stoffe, Stoffgemische oder deren Reaktionsprodukten liegt. Dabei werden die in der Suspension enthalten gewesenen pulverförmigen Bestandteile aufgeschmolzen und es kommt infolge der hohen Benetzung der Keramik mit der Schmelze zu einer Umverteilung dergestalt, daß die inneren Hohlräume der keramischen Stege, die Risse der keramischen Stege und die Porosität der keramischen Stege ganz oder im wesentlichen ganz mit der Schmelze ausgefüllt werden. Somit werden auch eventuell auftretende Risse in der aufgetrockneten Suspension beseitigt.
Bei der Realisierung dieser Variante der Erfindung entsteht nach dem Füllen der inneren Hohlräume der keramischen Stege, der Risse der keramischen Stege und der Porosität der keramischen Stege zuerst einmal nur eine teilweise Füllung dieser Bereiche mit Pulver und/oder deren Reaktionsprodukten entsprechend dem Feststoffgehalt der verwendeten Suspension. Gleichzeitig werden aber bei dieser Verfahrensvariante mit dem Füllen der inneren Hohlräume der keramischen Stege, der Risse der keramischen Stege und der Porosität der keramischen Stege die keramischen Stege an der äußeren Oberfläche mehr oder weniger dick mit der Suspension beschichtet. Nach dem Trocknen ist dann an den äußeren Oberflächen der keramischen Stege eine unterschiedlich dicke Schicht an Pulverbestandteilen und/oder deren Reaktionsprodukten vorhanden. Bei der Temperaturerhöhung auf eine Temperatur oberhalb der Schmelztemperatur der Pulverbestandteile und/oder deren Reaktionsprodukten schmelzen auch diese Schichten auf und füllen durch die Zugänge zu den Hohlräumen und den Rissen und durch die Poren in den keramischen Stegen die inneren Hohlräume der keramischen Stege, die Risse der keramischen Stege und die Porosität der keramischen Stege ganz oder im wesentlichen ganz aus.

Zum Füllen der inneren Hohlräume der keramischen Stege, der Risse der keramischen Stege und der Porosität der keramischen Stege können auch dickflüssige bis pastöse Suspensionen verwendet werden, die eine dicke Beschichtung auch auf den keramischen Stegen verursachen. Selbst ein teilweiser Verschluß der Zellen der Schaumkeramik durch die Suspension ist nicht störend, da diese nach dem Aufschmelzen der in der Suspension enthaltenen pulverförmigen Bestandteile und der Verteilung der Schmelze in den inneren Hohlräume der keramischen Stege, die Risse der keramischen Stege und die Porosität der keramischen Stege wieder beseitigt wird.

Eine derartig hergestellte Schaumkeramik besitzt eine sehr gleichmäßige Struktur bezüglich der Zellgröße und der Stegstärke, ist offenzellig, sehr fest und bis nahe an die Schmelztemperatur der in der Schaumkeramik vorliegenden niedrigschmelzenden Phase einsetzbar.

Enthält das Füllmaterial Bestandteile, die mit der Keramik des Schaumes reagieren, führt dies zum einen zu einer Verfestigung der Keramikhülle durch Füllen der Poren mit Reaktionsprodukten und zusätzliche Verbindung der Keramikteilchen. Zum zweiten unterstützt die Reaktion durch den Aufbau von Reaktionsfronten und Temperaturüberhöhungen die Füllung des Steginneren.

### Bester Weg zur Ausführung der Erfindung

Im weiteren wird die Erfindung an mehreren Ausführungsbeispielen erläutert.

### Beispiel 1

Es wird ein keramischer Schlicker auf Wasserbasis mit einer bimodalen SiC-Verteilung, mit einem Korngrößenmaxima von 1 und 20 µm, bei einem Feststoffgehalt von 55 - 65 Vol.-% hergestellt.
Ein 10 ppi-Polyurethanschaumstück der Abmessungen 40 x 40 x 25 mm wird mit diesem Schlicker getränkt. Der überschüssige Schlicker wird mittels einer Zentrifuge bis zu einer Masse von 15 g abgetrennt. Danach wird der beschichtete Schaum getrocknet und das Polyurethan bei 600 °C ausgebrannt. Die verbleibende SiC-Schaumkeramik wird bei 2300 °C unter Argonatmosphäre gesintert.
Nach dem Abkühlen erfolgt die Docht-Infiltration von flüssigem Silicium in die inneren Hohlräume, Risse und die Porosität der keramischen Stege unter Vakuum. Nach dem Erstarren des Silicium ist eine SiC-Schaumkeramik entstanden, bei der die inneren Hohlräume der keramischen Stege, die Risse der keramischen Stege und die Porosität der keramischen Stege mit Silicium gefüllt sind.
Die mittlere Bruchlast bei Eindruck eines Stempels mit einem Durchmesser von 20 mm beträgt bei einer Masse von 19 g 1500 N.
Ein keramischer Schaum aus einem vergleichbaren SiC-Werkstoff (keramisch gebunden oder flüssigphasengesintert) ohne Füllung der Poren und der Hohlräume der keramischen Stege hat bei gleiche Beschichtungsstärke eine Bruchlast von ca. 300 N.

### Beispiel 2

Es wird ein keramischer Schlicker auf Wasserbasis mit einer bimodalen SiC-Verteilung, mit einem Korngrößenmaxima von 1 und 20 µm, bei einem Feststoffgehalt von 55 - 65 Vol.-% hergestellt.
Ein 10 ppi-Polyurethanschaumstück der Abmessungen 40 x 40 x 25 mm wird mit diesem Schlicker getränkt. Der überschüssige Schlicker wird mittels einer Zentrifuge bis zu einer Masse von 15 g abgetrennt. Danach wird der beschichtete Schaum getrocknet und das Polyurethan bei 600 °C ausgebrannt. Die verbleibende SiC-Schaumkeramik wird bei 2300 °C unter Argonatmosphäre gesintert.
Weiterhin wird ein keramischer Schlicker auf Wasserbasis mit 50 Vol.-% Si-Pulver (d₅₀ = 10 µm) hergestellt. Die gesinterte Schaumkeramik wird mit diesem Schlicker getränkt und die überschüssige Suspension wird in einer Zentrifuge bis auf ca. 19 g Gewicht abgeschleudert. Danach wird die getränkte gesinterte Schaumkeramik getrocknet und unter Vakuum auf 1600 °C aufgeheizt. Dabei schmilzt das aufgebrachte Silicium und durchtränkt die SiC-Schaumkeramik.
Nach dem Erstarren des Silicium entsteht eine SiC-Schaumkeramik, bei der die inneren Hohlräume der keramischen Stege, die Risse der keramischen Stege und die Porosität der keramischen Stege mit Silicium gefüllt sind.
Die mittlere Bruchlast bei Eindruck eines Stempels mit einem Durchmesser von 20 mm beträgt bei einer Masse von 19 g 1500 N.

### Beispiel 3

Es wird ein keramischer Schlicker auf Wasserbasis mit einer bimodalen SiC-Verteilung, mit einem Korngrößenmaxima von 1 und 20 µm, bei einem Feststoffgehalt von 55 - 65 Vol.-% hergestellt.
Ein 40 ppi-Polyurethanschaumstück der Abmessungen 50 x 50 x 10 mm wird mit diesem Schlicker getränkt. Der überschüssige Schlicker wird mittels zweier Gummiwalzen durch Abquetschen entfernt. Danach wird der beschichtete Schaum getrocknet. Das Polyurethan wird pyrolysiert und gleichzeitig wird unter Vakuum bei 1600 °C in einem Prozeßschritt 20 bis 40 Ma.-%, bezogen auf den uninfiltrierten beschichteten Schaumes, flüssiges Silicium in die inneren Hohlräume, Risse und die Porosität der keramischen Stege infiltriert. Nach dem Erstarren des Silicium entsteht eine SiC-Schaumkeramik, bei der die inneren Hohlräume der keramischen Stege, die Risse der keramischen Stege und die Porosität der keramischen Stege mit Silicium gefüllt sind.
Die mittlere Bruchlast bei Eindruck eines Stempels mit einem Durchmesser von 20 mm beträgt bei einer Masse von 18 g 1000 N.

### Beispiel 4

Es wird ein keramischer Schlicker auf Wasserbasis mit einem SiC-Pulver, mit einem Korngrößenmaxima von 3 µm, und Ruß (4 % C auf SiC bezogen) bei einem Feststoffgehalt von 55 - 65 Vol.-% hergestellt.
Ein 10 ppi-Polyurethanschaumstück der Abmessungen 40 x 40 x 25 mm wird mit diesem Schlicker getränkt. Der überschüssige Schlicker wird mittels einer Zentrifuge bis zu einer Masse von 15 g abgetrennt und die beschichtete Schaumkeramik wird getrocknet. Das Polyurethan wird pyrolysiert und gleichzeitig wird unter Vakuum bei 1600 °C in einem Prozeßschritt 20 bis 40 Ma.-%, bezogen auf den uninfiltrierten beschichteten Schaumes flüssiges Silicium infiltriert. Das Silicium reagiert zuerst mit dem Ruß in den Stegbeschichtungen zu Sekundär-SiC, welches die vorhandenen SiC-Körner zusätzlich verbindet. Anschließend werden die restlichen Poren, inneren Hohlräume und Risse mit Silicium gefüllt. Nach dem Erstarren des Silicium entsteht eine SiC-Schaumkeramik, bei der die inneren Hohlräume der keramischen Stege, die Risse der keramischen Stege und die Porosität der keramischen Stege mit Silicium gefüllt sind..
Die mittlere Bruchlast bei Eindruck eines Stempels mit einem Durchmesser von 20 mm beträgt bei einer Masse von 19 g 1300 N.

### Beispiel 5

Es wird ein keramischer Schlicker auf Wasserbasis mit einer breiten Al₂O₃-Kornverteilung (Korngrößenmaximum 80 µm) und 10 Ma.-% Ton bei einem Feststoffgehalt von 60 - 70 Vol.-% hergestellt. Ein 10 ppi-Polyurethanschaumstück der Abmessung 40 x 40 x 25 mm wird mit diesem Schlicker getränkt. Der überschüssige Schlicker wird mittels einer Zentrifuge bis zu einer Masse von 15 g abgetrennt. Danach wird der beschichtete Schaum getrocknet und das Polyurethan bei 600 °C unter Luft ausgebrannt. Die verbliebenen Al₂O₃-Schaumkeramik wird bei 1350 °C gesintert. Anschließend erfolgt ein infiltrieren des Schaumes mit einer CuTi(20%Ti)-Legierung bei 1350 °C unter Vakuum, wobei die CuTi-Legierung flüssig zugeführt wird. Es ergibt sich eine Schaumkeramik, bei der die inneren Hohlräume der keramischen Stege, die Risse der keramischen Stege und die Porosität der keramischen Stege mit einer CuTi-Legierung gefüllt sind. Die äußere Hülle der Stege besteht aus Al₂O₃-Partikeln, und zwischen den Partikeln befindet sich die CuTi-Legierung.
Die mittlere Bruchlast bei Eindruck eines Stempels mit einem Durchmesser von 20 mm beträgt bei einer Masse von 40 g 1200 N.

### Beispiel 6

Es wird ein keramischer Schlicker auf Wasserbasis mit einem Feststoffgehalt von 60 Vol-% hergestellt. Der Feststoff des Schlickers besteht zu 80% aus einem SiC-Pulver mit einer bimodalen Korngrößenverteilung mit zwei Korngrößenmaxima von 6 und 20 µm und zu 20 % aus Ton.
Ein 10 ppi Polyurethanschaumstück mit einem Durchmesser von 70 mm und einer Höhe von 25 mm wird mit diesem Schlicker getränkt. Der überschüssige Schlicker wird mittels einer Zentrifuge bis zu einer Masse von 35 g abgetrennt. Danach wird der beschichtete Schaum getrocknet, das Polyurethan ausgebrannt und die Keramik bei 1200°C im Kammerofen unter Luft gebrannt.
Sodann erfolgt eine Tränkung der gesinterten Schaumkeramik mit einer wäßrigen Suspension mit 60 Vol% einer Mischung aus 85 % feindispersem SiO2 und 15 % Na-Silicat. Die überschüssige Suspension wird in der o.g. Zentrifuge vorsichtig abgeschleudert bis auf einen Massezuwachs von 25% und der getränkte Schaum wird getrocknet.
Sodann erfolgt im Durchlauf ein zweites Brennen bei 1200°C. Nach dem Brennen liegt eine tongebundene Siliciumcarbid-Schaumkeramik vor, bei der die inneren Hohlräume der keramischen Stege und die Risse der keramischen Stege nahezu vollständig mit einem silicatischen Glas gefüllt sind. Die mittlere Bruchlast bei Eindruck eines Stempels mit einem Durchmesser von 20 mm beträgt 800 N. Eine Probe ohne ausgefüllte Stege erreichte dagegen nur eine Bruchlast von 500 N.

### Beispiel 7

Es wird ein keramischer Schlicker auf Wasserbasis mit einem Feststoffgehalt von 78 Ma-% hergestellt. Der Feststoff des Schlickers besteht aus einer kommerziellen Al₂O₃-Sintermischung (96%ig, mittlere Korngröße 5 µm).

Ein 30 ppi Polyurethanschaumstück mit einer Abmessung von 125x40x20 mm wird mit diesem keramischen Schlicker getränkt. Der überschüssige Schlicker wird mittels einer Zentrifuge bis zu einer Masse von 60 g abgetrennt. Danach wird der beschichtete Schaum getrocknet, das Polyurethan ausgebrannt und die Keramik bei 1650°C im Kammerofen unter Luft gebrannt.
Sodann erfolgt eine Tränkung der gesinterten Schaumkeramik mit einer wäßrigen Suspension mit 60 Vol-% einer feingemahlenen Fritte aus Alumoborosilicatglas. Die überschüssige Suspension wird in der o.g. Zentrifuge abgeschleudert bis auf einen Massezuwachs von 30% und der getränkte Schaum wird getrocknet.
Sodann erfolgt ein zweites Brennen bei 1200°C. Nach dem Brennen liegt eine Aluminiumoxidkeramik vor, bei der die inneren Hohlräume der keramischen Stege und die Risse der keramischen Stege nahezu vollständig mit einem silicatischen Glas gefüllt sind.
Die mittlere Bruchlast bei Eindruck eines Stempels mit einem Durchmesser von 20 mm beträgt 2000 N. Proben ohne ausgefüllte Stege erreichten dagegen nur eine mittlere Bruchlast von 1500 N.

## Patentansprüche

1. Offenzellige Schaumkaramik mit hoher Festigkeit bei der die inneren Hohlräume der keramischen Stege, die Risse der keramischen Stege und die Porosität der keramischen Stege mit einer oder mehreren metallischen und/oder keramischen Phasen und/oder, Glasphasen ganz oder im wesentlichen ganz gefüllt sind.

2. Offenzellige Schaumkeramik nach Anspruch 1, bei der die inneren Hohlräume der keramischen Stege, die Risse der keramischen Stege und die Porosität der keramischen Stege mit einer oder mehreren metallischen Phasen ganz oder im wesentlichen ganz gefüllt sind.

3. Offenzellige Schaumkeramik nach Anspruch 1, bei der die inneren Hohlräume der keramischen Stege, die Risse der keramischen Stege und die Porosität der keramischen Stege mit einer oder mehreren keramischen Phasen ganz oder im wesentlichen ganz gefüllt sind.

4. Offenzellige Schaumkeramik nach Anspruch 1, bei der die inneren Hohlräume der keramischen Stege, die Risse der keramischen Stege und die Porosität der keramischen Stege mit einer oder mehreren Glasphasen ganz oder im wesentlichen ganz gefüllt sind.

5. Offenzellige Schaumkeramik nach Anspruch 1, bei der die inneren Hohlräume der keramischen Stege, die Risse der keramischen Stege und die Porosität der keramischen Stege mit Silicium oder Siliciumverbindungen, mit Molybdän oder Metallsiliciden oder mit Aluminium-Yttriumoxid oder mit Kalzium-Silikaten oder Strontium-Kalzium-Silikaten oder Fluoriden für Siliciumcarbid-Schaumkeramiken, mit Kupfer-Titan- oder Eisen-Titan-Legierungen oder mit Titancarbid für Aluminiumoxid-Schaumkeramiken, mit Mullit für Zirkonoxid-Schaumkeramiken ganz oder im wesentlichen ganz gefüllt sind.

6. Offenzellige Schaumkeramik nach Anspruch 1, bei der die inneren Hohlräume der keramischen Stege, die Risse der keramischen Stege und die Porosität der keramischen Stege von Siliciumcarbid-Schaumkeramiken mit Silicium und/oder Siliciumverbindungen ganz oder im wesentlichen ganz gefüllt sind.

7. Verfahren zur Herstellung einer offenzelligen Schaumkeramik mit hoher Festigkeit, deren innere Hohlräume der keramischen Stege, die Risse der keramischen Stege und die Porosität der keramischen Stege mit einer oder mehreren metallischen und/oder keramischen Phasen und/oder Glasphasen ganz oder im wesentlichen ganz gefüllt sind, bei dem ein offenzelliger Poiymerschaum zugeschnitten, mit einer Suspension aus keramischen Partikeln und Wasser oder einem Lösungsmittel beschichtet, ausgepreßt und getrocknet wird, danach der Polymerschaum ausgebrannt oder pyrolysiert wird, anschließend der beschichtete Schaum gesintert wird und während oder nach der Sinterung die Hahlräume der keramische Stege, die Risse der keramischen Stege und die Porosität der keramischen Stege der gesinterten Schaumkeramik mit einer Schmelze oder einer Suspension ganz oder im wesentlichen ganz gefüllt werden, wobei die Schmelze und die Suspension aus Stoffen besteht, die unterhalb der Schmelztemperatur der Schaumkeramik schmelzen, einen ähnlichen Ausdehnungskoeffizienten wie die Schaumkeramik aufweisen, sehr gut benetzend sind und nicht oder teilweise mit Bestandteilen der Schaumkeramik reagieren, und wobei im Falle der Füllung der Stege mit einer Suspension anschließend die mit der Suspension gefüllte Schaumkeramik bis auf eine Temperatur oberhalb der Schmelztemperatur der in der Suspension enthaltenen Stoffe, Stoffgemische oder deren Reaktionsprodukte aufgeheizt wird.

8. Verfahren nach Anspruch 7, bei dem die Hohlräume der keramische Stege, die Risse der keramischen Stege und die Porosität der keramischen Stege der gesinterten Schaumkeramik mit einer Schmelze gefüllt werden, die aus Silicium oder Siliciumverbindungen, aus Molybdän oder Melallsiliciden oder aus Aluminium-Yttriumoxid oder aus Kalzium-Silikaten oder Strontium-Kaizium-Siliksten oder Fluoriden für Siliciumcarbid-Schaumkeramiken, aus Kupfer-Titan- oder Eisen-Titan-Legierungen oder aus Titancarbid für Aluminiumoxid-Schaumkeramiken, aus Mullit für Zirkonoxid-Schaumkeramiken besteht.

9. Verfahren nach Anspruch 7, bei dem die Hohlräume der keramische Stege, die Risse der keramischen Stege und die Porosität der keramischen Stege der gesinterten Schaumkeramik mit einer Schmelze gefüllt werden, die aus Silicium oder Siliciumverbindungen mit Aluminium, Bor, Eisen, Kupfer oder Sauerstoff für Siliciumcarbid-Schaumkeramiken besteht.

10. Verfahren nach Anspruch 7, bei dem die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel Pulver aus Silicium oder Siliciumverbindungen, aus Molybdän oder Metallsiliciden oder aus Aluminium-Yttriumoxid oder aus Kalzium-Silikaten oder Strontium-Kalzium-Silikaten oder Fluoriden für Siliciumcarbid-Schaumkeramiken, aus Kupfer-Titan- oder Eisen-Titan-Legierungen oder aus Titancarbid für Aluminiumoxid-Schaumkeramiken, aus Mullit für Zirkonoxid-Schaumkeramiken enthält.

11. Verfahren nach Anspruch 7, bei dem die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel Pulver aus Silicium oder Siliciumverbindungen mit Aluminium, Bor, Eisen, Kupfer oder Sauerstoff für Siliciumcarbid-Schaumkeramiken enthält.

12. Verfahren nach Anspruch 7, bei dem die Hohlräume der keramische Stege, die Risse der keramischen Stege und die Porosität der keramischen Stege der gesinterten Schaumkeramik mit einer Suspension gefüllt werden, die neben Wasser oder einem Lösungsmittel ein Pulver aus Glasfritte enthält.

13. Verfahren nach Anspruch 12, bei dem Glasfritte eingesetzt wird, die aus Fritten von einem oder mehreren Borosilicatgläsern, Alumoborosilicatgläsern und/oder Lithiumalumosilicatgläsern besteht.

14. Verfahren nach Anspruch 7, bei dem die eingesetzten Stoffe, aus denen die Schmelze besteht oder die in der Suspension enthalten sind, im geschmolzenen Zustand einen Kontaktwinkel von 0 bis 50 ° aufweisen.

15. Verfahren nach Anspruch 7, bei dem die eingesetzten Stoffe, aus denen die Schmelze besteht oder die in der Suspension enthalten sind, im geschmolzenen Zustand teilweise mit Bestandteilen der Schaumkeramik reagieren und damit zu einer Reaktionsbindung mit der Schaumkeramik führen.,

16. Verfahren nach Anspruch 7, bei dem die Füllung der inneren Hohlräume der keramischen Stege, die Risse der keramischen Stege und der Porosität der keramischen Stege durch Schmelzeninfiltration erfolgt.

17. Verfahren nach Anspruch 16, bei dem die Schmelzeninfiltration durch Docht-, Schütt- oder Pasteninfiltration erfolgt.

## Claims

1. Open-cell expanded ceramic with high strength, in which the inner cavities of the ceramic struts, the cracks of the ceramic struts and the pores of the ceramic struts are filled completely or substantially completely with one or more metallic phases and/or ceramic phases and/or glass phases.

2. Open-cell expanded ceramic according to claim 1, in which the inner cavities of the ceramic struts, the cracks of the ceramic struts and the pores of the ceramic struts are filled completely or substantially completely with one or more metallic phases.

3. Open-cell expanded ceramic according to claim 1, in which the inner cavities of the ceramic struts, the cracks of the ceramic struts and the pores of the ceramic struts are filled completely or substantially completely with one or more ceramic phases.

4. Open-cell expanded ceramic according to claim 1, in which the inner cavities of the ceramic struts, the cracks of the ceramic struts and the pores of the ceramic struts are filled completely or substantially completely with one or more glass phases.

5. Open-cell expanded ceramic according to claim 1, in which the inner cavities of the ceramic struts, the cracks of the ceramic struts and the pores of the ceramic struts are filled completely or substantially completely with silicon or silicon compounds, with molybdenum or metal silicides or with aluminum yttrium oxide or with calcium silicates or strontium calcium silicates or fluorides for silicon carbide expanded ceramics, with copper-titanium alloys or iron-titanium alloys or with titanium carbide for aluminum oxide expanded ceramics, with mullite for zirconium oxide expanded ceramics.

6. Open-cell expanded ceramic according to claim 1, in which the inner cavities of the ceramic struts, the cracks of the ceramic struts and the pores of the ceramic struts of silicon carbide expanded ceramics are filled completely or substantially completely with silicon and/or silicon compounds.

7. Process for the production of an open-cell expanded ceramic with high strength, whose inner cavities of the ceramic struts, cracks of the ceramic struts and pores of the ceramic struts are filled completely or substantially completely with one or more metallic phases and/or ceramic phases and/or glass phases, in which an open-cell polymer foam is cut to size, coated with a suspension of ceramic particles and water or a solvent, pressed out and dried, the polymer foam is then burned out or pyrolized, the coated foam is subsequently sintered and, during or after the sintering, the cavities of the ceramic struts, the cracks of the ceramic struts and the pores of the ceramic struts of the sintered expanded ceramic are filled completely or substantially completely with a melt or a suspension, wherein the melt and the suspension comprise materials which melt below the melting temperature of the expanded ceramic, have a coefficient of expansion similar to that of the expanded ceramic, exhibit very good wetting and react partially or not at all with components of the expanded ceramic, and wherein, when the struts are filled with a suspension, the expanded ceramic filled with the suspension is subsequently heated to a temperature above the melting temperature of the materials, mixtures of materials or reaction products thereof contained in the suspension.

8. Process according to claim 7, in which the cavities of the ceramic struts, the cracks of the ceramic struts and the pores of the ceramic struts of sintered expanded ceramic are filled with a melt comprising silicon or silicon compounds, molybdenum or metal silicides or aluminum yttrium oxide or calcium silicates or strontium calcium silicates or fluorides for silicon carbide expanded ceramics, copper-titanium alloys or iron-titanium alloys or titanium carbide for aluminum oxide expanded ceramics, mullite for zirconium oxide expanded ceramics.

9. Process according to claim 7, in which the cavities of the ceramic struts, the cracks of the ceramic struts and the pores of the ceramic struts of the sintered expanded ceramic are filled with a melt comprising silicon or silicon compounds, aluminum, boron, iron, copper or oxygen for silicon carbide expanded ceramics.

10. Process according to claim 7, in which the cavities of the ceramic struts, the cracks of the ceramic struts and the pores of the ceramic struts of the sintered expanded ceramic are filled with a suspension which, in addition to water or a solvent, comprises powder of silicon or silicon compounds, molybdenum or metal silicides or aluminum yttrium oxide or calcium silicates or strontium calcium silicates or fluorides for silicon carbide expanded ceramics, copper-titanium alloys or iron-titanium alloys or titanium carbide for aluminum oxide expanded ceramics, mullite for zirconium oxide expanded ceramics.

11. Process according to claim 7, in which the cavities of the ceramic struts, the cracks of the ceramic struts and the pores of the ceramic struts of the sintered expanded ceramic are filled with a suspension which, in addition to water or a solvent, contains powder of silicon or silicon compounds with aluminum, boron, iron, copper or oxygen for silicon carbide expanded ceramics.

12. Process according to claim 7, in which the cavities of the ceramic struts, the cracks of the ceramic struts and the pores of the ceramic struts of the sintered expanded ceramic are filled with a suspension which, in addition to water or a solvent, contains powder of glass frit.

13. Process according to claim 12, in which glass frit comprising frit of one or more boron silicate glasses, aluminum boron silicate glasses and/or lithium aluminum silicate glasses is used.

14. Process according to claim 7, in which the utilized materials of which the melt is comprised or which are contained in the suspension have a contact angle of 0 to 50° in the molten state.

15. Process according to claim 7, in which the utilized materials of which the melt is comprised or which are contained in the suspension react partially with components of the expanded ceramic in the molten state and accordingly lead to a reaction bonding with the expanded ceramic.

16. Process according to claim 7, in which the filling of the inner cavities of the ceramic struts, cracks of the ceramic struts and pores of the ceramic struts is carried out by means of melt infiltration.

17. Process according to claim 16, in which the melt infiltration is carried out by wick infiltration, bulk infiltration or paste infiltration.

## Revendications

1. Céramique en mousse à alvéoles ouvertes ayant une résistance élevée,
dans laquelle les cavités internes des traverses céramiques, les crevasses des traverses céramiques et la porosité des traverses céramiques, sont remplies d'une ou plusieurs phases métalliques et/ou céramiques et/ou de phases de verre d'une manière totale ou essentiellement totale.

2. Céramique en mousse à alvéoles ouvertes selon la revendication 1,
dans laquelle les cavités internes des traverses céramiques, les crevasses des traverses céramiques et la porosité des traverses céramiques sont remplies totalement ou essentiellement totalement d'une ou plusieurs phases métalliques.

3. Céramique en mousse à alvéoles ouvertes
dans laquelle les cavités internes des traverses céramiques, les crevasses des traverses céramiques et la porosité des traverses céramiques sont remplies totalement ou essentiellement totalement d'une ou plusieurs phases céramiques.

4. Céramique en mousse à alvéoles ouvertes selon la revendication 1,
dans laquelle les cavités internes des traverses céramiques, les crevasses des traverses céramiques, et la porosité des traverses céramiques sont remplies totalement ou essentiellement totalement, d'une ou plusieurs phases de verre.

5. Céramique en mousse à alvéoles ouvertes selon la revendication 1,
dans laquelle les cavités internes des traverses céramiques, les crevasses des traverses céramiques et la porosité des traverses céramiques sont remplies totalement ou essentiellement totalement de silicium ou de composés du silicium, de molybdène ou de siliciures métalliques, ou d'aluminium-oxyde d'yttrium ou de silicates de calcium ou de silicates-strontium-calcium ou de fluorures pour céramiques en mousse de carbure de silicium, d'alliages cuivre-titane ou fer-titane ou de carbure de titane pour céramiques en mousse-oxyde d'aluminium, ou de mullite pour céramiques en mousse-oxyde de zirconium.

6. Céramique en mousse à alvéoles ouvertes selon la revendication 1,
dans laquelle les cavités internes des traverses céramiques, les crevasses des traverses céramiques et la porosité des traverses céramiques de céramiques en mousse-carbure de silicium sont remplies totalement ou essentiellement totalement de silicium et/ou de composés du silicium.

7. Procédé de préparation d'une céramique en mousse à alvéoles ouvertes ayant une résistance élevée, dont les cavités internes des traverses céramiques, les crevasses des traverses céramiques, et la porosité des traverses céramiques sont remplies d'une ou plusieurs phases métalliques et/ou de phases céramiques et/ou de phases de verre, totalement ou essentiellement totalement, selon lequel une mousse de polymère à alvéoles ouvertes est découpée, est revêtue d'une suspension à base de particules de céramique et d'eau ou d'un solvant, est exprimée et séchée, ensuite la mousse de polymère est brûlée ou pyrolysée, ensuite la mousse revêtue est frittée et pendant ou après le frittage les cavités des traverses céramiques, les crevasses des traverses céramiques et la porosité des traverses céramiques de la céramique en mousse frittée sont remplies totalement ou essentiellement totalement d'un produit de fusion ou d'une suspension, le produit de fusion ou la suspension étant formée de substances qui fondent en dessous de la température de fusion de la céramique en mousse, possèdent des coefficients de dilatation similaires à celui de la céramique en mousse, sont très bien mouillantes et ne réagissent pas ou qui réagissent partiellement avec des constituants de la céramique en mousse, et selon lequel dans le cas du remplissage des traverses avec une suspension, la céramique en mousse remplie de suspension est ensuite chauffée jusqu'à une température au-dessus de la température de fusion des substances, mélanges de substances ou de leurs produits de réaction contenus dans la suspension.

8. Procédé selon la revendication 7,
dans lequel les cavités des traverses céramiques, les crevasses des traverses céramiques et la porosité des traverses céramiques des céramiques en mousse frittée sont remplies d'un produit de fusion qui consiste en du silicium ou de composés du silicium, en du molybdène ou en des siliciures métalliques, ou en aluminium-oxyde d'yttrium ou en silicates-calcium ou en silicates strontium-calcium ou en des fluorures pour des céramiques en mousse carbure de silicium, en des alliages cuivre-titane, ou fer-titane ou en du carbure de titane pour des céramiques en mousse-oxyde d'aluminium, en de la mullite pour céramique en mousse-oxyde de zirconium.

9. Procédé selon la revendication 7
dans lequel les cavités des traverses céramiques, les crevasses des traverses céramiques et la porosité des traverses céramiques de la céramique en mousse frittée sont remplies d'un produit de fusion qui consiste en du silicium ou en des composés du silicium, avec de l'aluminium, du bore, du fer, du cuivre ou de l'oxygène pour des céramiques en mousse-carbure de silicium.

10. Procédé selon la revendication 7,
dans lequel les cavités des traverses céramiques, les crevasses des traverses céramiques et la porosité des traverses céramiques de la céramique en mousse frittée sont remplies d'une suspension qui renferme à côté de l'eau ou d'un solvant, une poudre de silicium ou de composés du silicium, de molybdène ou de siliciures métalliques ou d'aluminium-oxyde d'yttrium ou de silicates de calcium ou de silicates strontium-calcium, ou de fluorure pour céramiques en mousse-carbure de silicium, en alliages cuivre-titane ou fer-titane ou de carbure de titane pour céramiques en mousse-oxyde d'aluminium, de mullite pour des céramiques en mousse-oxyde de zirconium.

11. Procédé selon la revendication 7,
dans lequel les cavités des traverses céramiques, les crevasses des traverses céramiques et la porosité des traverses céramiques de la céramique en mousse frittée sont remplies d'une suspension qui renferme, à côté d'eau ou d'un solvant, une poudre de silicium ou de composés du silicium avec de l'aluminium, du bore, du fer, du cuivre, ou de l'oxygène pour céramiques en mousse-carbure de silicium.

12. Procédé selon la revendication 7,
dans lequel les cavités des traverses céramiques, les crevasses des traverses céramiques et la porosité des traverses céramiques de la céramique en mousse frittée, sont remplies d'une suspension qui renferme à côté d'eau ou d'un solvant, une poudre en fritte de verre.

13. Procédé selon la revendication 12,
dans lequel on met en oeuvre des frittes de verre qui consistent en des frittes d'un ou plusieurs verres borosilicatés, de verres aluminosilicatés et/ou de verres aluminosilicatés au lithium.

14. Procédé selon la revendication 7,
dans lequel les substances mises en oeuvre dont le produit de fusion est formé, ou qui sont contenues dans la suspension, possèdent à l'état fondu un angle de contact allant de 0 à 50°.

15. Procédé selon la revendication 7,
dans lequel les substances mises en oeuvre dont le produit de fusion est formé ou qui sont contenues dans la suspension, réagissent partiellement à l'état fondu avec des constituants de la céramique en mousse et ainsi conduisent à une liaison réactionnelle avec la céramique en mousse.

16. Procédé selon la revendication 7,
dans lequel le remplissage des cavités internes des traverses céramiques, des crevasses des traverses céramiques et de la porosité des traverses céramiques s'effectue par infiltration à l'état fondu.

17. Procédé selon la revendication 16,
dans lequel l'infiltration à l'état fondu s'effectue par infiltration par mèche, par infiltration en tas ou par infiltration de pâtes.
